# EUROPEAN PATENT APPLICATION

(11) **EP 2 062 483 A1**
(43) Date of publication of application: **27.05.2009**
(21) Application number: 08160528.9
(22) Date of filing: 16.07.2008
(51) Int. Cl.: A23N 12/02, A47J 43/24

(54) **Device for cleaning of fruits and vegetables**

(30) Priority: 20.11.2007 ES 200701978 U
(71) Applicant: Paradela Gutierrez, Jose Luis, 30880 Aguilas, Murcia (ES)
(72) Inventor: Paradela Gutierrez, Jose Luis, 30880 Aguilas, Murcia (ES)
(74) Representative: Pons Arino, Angel

(57) **Abstract**

Apparatus (1) for cleaning fruits and vegetables, which comprises a rotating drainage receptacle (2); pressurised fluid spray nozzles (3) directed at the receptacle; an air turbine (4) for drying; and stirring blades (5), in order to thoroughly wash and dry the fruits and vegetables that are placed in the receptacle (2).

## Description

### OBJECT OF THE INVENTION

The main object of the present invention is an apparatus for cleaning fruits and vegetables, which enables the immediate consumption of these products or their storage in optimum hygiene conditions, free from impurities or insecticides adhered to the surface thereof.

### BACKGROUND OF THE INVENTION

At present, horticultural products, such as fruits and vegetables, reach the consumer with their surface having been washed or cleaned, the main purpose of which is to remove the remains of soil, but which in no case ensures that they are thoroughly cleaned, which means that these products cannot be consumed directly. These washing processes are carried out in industrial washers that do not dry the product or draw off impurities or insecticides.

The end consumer therefore has to thoroughly wash the product before consuming it.

This washing process is usually carried out in a bowl or under the tap. In the former of these cases the washing water remains in the bowl with the debris from washing, and the product is in contact with this water, which means that no very satisfactory results are achieved unless the product has been pre-washed under the tap.

In the latter case, the pieces of product must be washed one by one or in small groups, with the consequent waste of time and water. After washing the product, it remains wet, and therefore requires drying or draining piece by piece if it is to be stored without mould or other microorganisms proliferating, or if it is to be consumed without being wet.

### DESCRIPTION OF THE INVENTION

The apparatus for cleaning fruits and vegetables of the invention has a simple arrangement that overcomes the aforementioned drawbacks, as it cleans the pieces by dissolving and drawing off the impurities or microbes.

According to the invention, the apparatus comprises a rotating drainage receptacle, pressurised spray nozzles for cleaning fluids that are directed at the receptacle, an air turbine for drying, and stirring blades. When the product is placed in the receptacle and the apparatus is switched on, the entire surface of the product is sprayed with the fluids thanks to the action of the spray nozzles and the stirring action of the blades, and then it is dried thanks to the action of the turbine, leaving it ready to consume or store.

The cleaning fluid that is used consists mainly of water, which can be pretreated, for example, by an ozoniser, a water softener or a disinfectant, whilst the fluid is propelled towards the spray nozzles by means of a pump and a fluid feed pipe.

### DESCRIPTION OF THE DRAWINGS

To complement this description and in order to aid a better understanding of the characteristics of the invention, according to a preferred practical embodiment thereof, a set of illustrative and non-limitative drawings integral to said description has been attached, which are as follows:
Figure 1 shows a schematic cross-sectional view of the apparatus of the invention.
Figure 2 shows an outer view of the apparatus of the invention in a variant embodiment for domestic use.
Figure 3 shows a view of the apparatus of figure 2, wherein the inner casing is being removed for repairs.
Figure 4 shows a detailed view of the receptacle or basket of the apparatus of the invention.

### PREFERRED EMBODIMENT OF THE INVENTION

The apparatus (1) for cleaning fruits and vegetables of the invention, as shown in the domestic version of the figures, comprises a rotating drainage receptacle (2), pressurised fluid spray nozzles (3) that are directed at the receptacle (2), an air turbine (4) for drying, and stirring blades (5), so that the fruits and vegetables are placed in the receptacle (2) and their entire surface is pressure sprayed with the fluids thanks to the action of the pressurised spray nozzles (3) and the stirring action of the blades (5), and they are then dried thanks to the action of the turbine (4). This process removes impurities and insecticides both by dilution in water and by drawing them off due to the pressurised spraying, and subsequent drying.

The cleaning fluid that is used consists mainly of water, which can be pretreated, for example, by an ozoniser, a water softener or a disinfectant, which are not shown, so that it is in an optimum state for cleaning and disinfecting the product. The fluid is propelled towards the pressurised spray nozzles (3) by a pump, which is not shown.

The blades (5) are mounted on a lifting mechanism (6), preferably automatic, which pushes them into the receptacle (2) during the cleaning process and withdraws them from the receptacle after drying so that said receptacle (2) can be taken out to remove or replace the product to be treated.

When the blades (5) are in a lowered position, the rotation of the receptacle (2) and the action of the blades stir the fruits or vegetables, thus ensuring that the sprayed fluid soaks them completely, drawing off impurities and insecticides. The rotation is slow, and in this example of the invention a full rotation takes approximately 10 seconds.

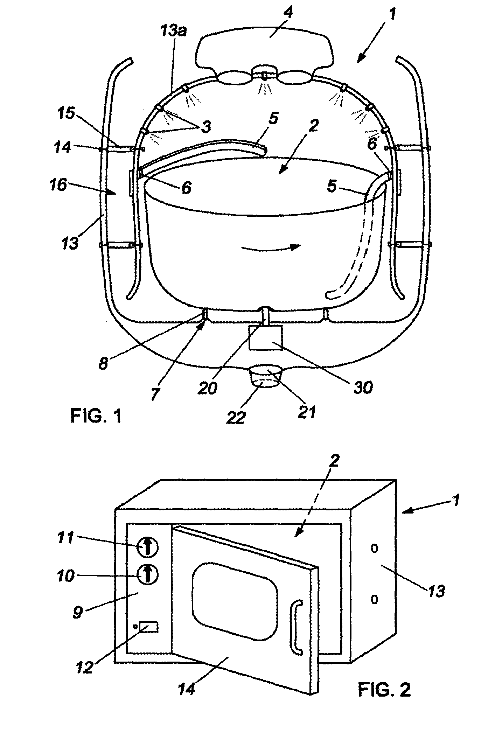

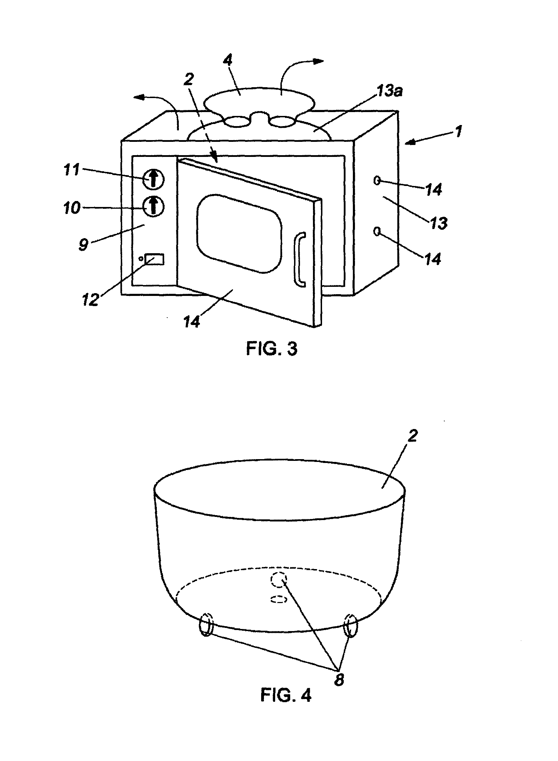

The receptacle (2) is set in motion by a rotating shaft (20) situated in the centre of an outer casing (13a), which is actuated by an electric motor (30). The rotating movement is guided by means of a circular guide (7) and wheels (8) that run on said circular guide (7). In figures 1 and 4 it can be seen how the wheels (8) are mounted on the receptacle (2). Once the receptacle has been set in motion, the water pump for the pressurised spraying is switched on. This stage takes approximately three minutes, with the possibility of regulating the time and fluid pressure according to the nature of the product.

Following this, the drying stage begins, wherein the water pump is switched off and the turbine (4) or fan is switched on, whilst the rotation of the receptacle (2) and the lowered position of the blades (5) continue. This stage lasts for approximately two minutes, and thereafter the blades (5) are automatically raised and the shaft (20) stops moving to allow for the manual removal of the rotating drainage receptacle (2), which consists of a basket in this example of embodiment.

The product can then be consumed dry or stored properly. For example, once treated and dried, strawberries can be placed in a container, covered with transparent plastic film and stored in the refrigerator. As the product is dry, this prevents it from macerating due to moisture and prevents mould from proliferating.

For the fluid supply, the apparatus of the invention comprises a water intake, which is not shown. There is also a drain (22) wherethrough the water is drained, wherein a removable filter (21) is positioned.

The apparatus (1) of the invention ideally comprises a double casing constituted by an outer casing (13) and an inner casing (13a), as can be seen in the figures. The outer casing (13) is practicable by means of a front door (14), and the inner casing (13a) is open at the bottom and closed at the top, defining a space (16) between the two casings (13, 13a) that allows for the exit of the drying air, which is evacuated through the top of the outer casing (13).

On the door (14) there is a safety lock element, which is not shown, to prevent the apparatus (1) from operating with the door (14) open.

The outer casing (13) is fastened to the inner casing (13a) by bolts (14) and bushing spacers (15), which makes it easy to disassemble in the event of a failure, it being possible to remove it through the top of the outer casing (13), as can be seen in figure 3.

As can be seen in figure 1, the blades (5) with their lifting mechanisms (6) and the turbine (4) are mounted on the inner casing.

The apparatus (1) of the invention also comprises a control panel (9) located on the outer casing (13), whereon, in this example if the invention, there are at least: a fluid pressure control (11), which makes it possible to reduce the maximum automatic pressure to other lower pressures if the product to be treated is delicate; a timer (10) to regulate the duration of the treatment; and a start/stop button (12). The apparatus (1) also comprises the corresponding power supply, which is not shown.

## Claims

1. Apparatus (1) for cleaning fruits and vegetables **characterised in that** it comprises a rotating drainage receptacle (2); pressurised fluid spray nozzles (3) directed at the receptacle (2); an air turbine (4) for drying; and stirring blades (5), in order to thoroughly wash and dry the fruits and vegetables that are placed in the receptacle (2).

2. Apparatus (1) for cleaning fruits and vegetables according to claim 1 **characterised in that** the receptacle (2) comprises a basket.

3. Apparatus (1) for cleaning fruits and vegetables according to claims 1 or 2 **characterised in that** the receptacle (2) can be removed.

4. Apparatus (1) for cleaning fruits and vegetables according to any of the previous claims **characterised in that** it comprises a pump that feeds fluid to the pressurised spray nozzles (3).

5. Apparatus (1) for cleaning fruits and vegetables according to any of the previous claims **characterised in that** the blades (5) are mounted on a lifting mechanism (6) in order to push them into and withdraw them from the receptacle (2).

6. Apparatus (1) for cleaning fruits and vegetables according to any of the previous claims **characterised in that** it comprises a rotating shaft (20) actuated by a motor (30) for rotating the receptacle (2).

7. Apparatus (1) for cleaning fruits and vegetables according to any of the previous claims **characterised in that** it comprises a circular guide (7) and wheels (8) that run on said circular guide (7) for guiding the receptacle (2).

8. Apparatus (1) for cleaning fruits and vegetables according to any of the previous claims **characterised in that** it comprises a water intake.

9. Apparatus (1) for cleaning fruits and vegetables according to any of the previous claims **characterised in that** it comprises a drain (22).

10. Apparatus (1) for cleaning fruits and vegetables according to claim 9
**characterised in that** the drain (22) comprises a removable filter (21).

11. Apparatus (1) for cleaning fruits and vegetables according to any of the previous claims **characterised in that** it comprises a control panel (9).

12. Apparatus (1) for cleaning fruits and vegetables according to claim 11 **characterised in that** the control panel (9) implements controls selected from at least:
fluid pressure control (11),
timer (10), and
start/stop button (12).

13. Apparatus (1) for cleaning fruits and vegetables according to any of the previous claims **characterised in that** it comprises a power supply.

14. Apparatus (1) for cleaning fruits and vegetables according to any of the previous claims **characterised in that** it comprises a double casing with an outer casing (13) and an inner casing (13a), as well as a space (16) defined therebetween in order to facilitate the exit of the drying air.

15. Apparatus (1) for cleaning fruits and vegetables according to claim 14 **characterised in that** the inner casing (13a) is open at the bottom and closed at the top.

16. Apparatus (1) for cleaning fruits and vegetables according to claims 14 or 15 **characterised in that** the outer casing (13) comprises a door (14) in order to make it possible to remove the receptacle (2).

17. Apparatus (1) for cleaning fruits and vegetables according to claim 16
**characterised in that** the door (14) of the outer casing (13) comprises a safety locking element in order to prevent the apparatus from operating with the door (14) open.

18. Apparatus (1) for cleaning fruits and vegetables according to claims 14 to 17 **characterised in that** the inner casing (13a) houses the turbine (4) and the pressurised spray nozzles (3).

19. Apparatus (1) for cleaning fruits and vegetables according to claims 14 to 18 **characterised in that** the inner casing (13a) is fastened to the outer casing (13) by means of bolts (14) and bushing spacers (15).

20. Apparatus (1) for cleaning fruits and vegetables according to any of the previous claims **characterised in that** it additionally comprises a fluid ozoniser.

21. Apparatus (1) for cleaning fruits and vegetables according to any of the previous claims **characterised in that** it additionally comprises a water softener.

22. Apparatus (1) for cleaning fruits and vegetables according to any of the previous claims **characterised in that** it additionally comprises a fluid disinfectant.
